# EUROPÄISCHE PATENTSCHRIFT

(11) **EP 2 463 133 B1**
(45) Veröffentlichungstag und Bekanntmachung des Hinweises auf die Patenterteilung: **07.06.2017**
(21) Anmeldenummer: 11190433.0
(22) Anmeldetag: 24.11.2011
(51) Int. Cl.: B60J 10/16, B60J 10/265, B60J 10/30, B60J 10/70, B60J 10/78

(54) **Dichtungsanordnung für eine Scheibeneinheit**
Seal for a glass arrangement
Joint d'étanchéité pour un module de vitrage

(30) Priorität: 08.12.2010 DE 202010013082 U
(43) Veröffentlichungstag der Anmeldung: 13.06.2012
(73) Patentinhaber: Richard Fritz Holding GmbH, 74354 Besigheim (DE)
(72) Erfinder: Schapitz, Nikolaj, 74354 Besigheim (DE)
(74) Vertreter: Maser, Jochen

(56) Entgegenhaltungen:
- EP-A1- 0 792 766
- EP-A2- 0 076 924
- EP-A2- 1 690 710
- DE-A1-102004 028 738
- DE-A1-102007 015 466
- DE-A1-102009 010 015
- DE-B- 1 032 627
- DE-U1- 29 502 214
- FR-A1- 2 858 950
- GB-A- 2 422 398
- JP-A- 2007 276 686
- US-A1- 2006 156 632

## Beschreibung

Die Erfindung betrifft eine Scheibeneinheit für Fenster an Kraftfahrzeugen und dergleichen, welche eine erste Scheibe mit einem Rahmen umfasst, der den Rand der Scheibe an wenigstens zwei Seiten umfasst, wobei der Rahmen an wenigstens zwei Stirnseiten der Scheibe angreift oder die Scheibe ringförmig in sich geschlossen umgibt, und einem Führungssteg zur Führung einer zweiten beweglichen Scheibe, welcher an der ersten Scheibe fest angeordnet ist, sowie ein Verfahren zu deren Herstellung.

Fensterführungsstege sind im Stand der Technik allgemein bekannt. In der FR 2 858 950 ist ein zweiteiliger Fensterführungssteg offenbart, der durch das Zusammenstecken von zwei Hälften ein festes, mit einer Umspritzung versehenes Fenster und dem gegenüber liegend ein Fensterführungselement aufnimmt, um ein bewegtes Fenster zum Öffnen und Schließen zu führen.

Weiterer technischer Hintergrund für eine solche Scheibeneinheit mit einem Dreieckfenster ist die EP 1 499 512 B1, welche einen Fensterführungssteg zeigt, welcher zur Aufnahme eines Dichtungselements vorgesehen ist, in welches die Scheibe des festen Fensters einsetzbar ist.

Aus der gattungsgemäßen EP 0 792 766 A1 geht eine Scheibeneinheit für ein Fenster für Kraftfahrzeuge hervor, welche eine feststehende sowie eine auf und ab bewegbare Scheibe umfasst, wobei an einer Seite der feststehenden Scheibe eine Umspritzung aus einer Weichkomponente vorgesehen ist, welche ein metallisches Profilelement teilweise umschließt und die feststehende Scheibe mit Abstand zum Profilelement positioniert. Zum Führen der bewegbaren Scheibe ist in die U-förmige Öffnung des metallischen Profilelementes eine Fensterführung eingesetzt.

Ein analoger Aufbau geht aus der DE 10 2007 015 466 A1, der US 2006/0156632 A und der GB 2 422 398 A hervor, wobei bei diesen Scheibeneinheiten ein Blendenelement unmittelbar an der elastischen Komponente an einer Sichtseite der Scheibeneinheit angebracht ist, wohingegen das Blendenelement gemäß der EP 0 792 766 A1 an der elastischen Komponente aufklipsbar, jedoch aufgrund der Befestigung an der elastischen Komponente leicht verlierbar ist.

Der Nachteil dieser Ausführungsformen ist die aufwändige Herstellung und Montage des Fensters mit dem Führungsstegs und dem Blendenelement im entsprechenden Karosserieteil des Kraftfahrzeugs wie beispielsweise einer hinteren Tür. Des Weiteren ist ein nachträgliches Austauschen beziehungsweise Montieren des Blendenelementes an der Scheibeneinheit nicht möglich, so dass individuelle Designwünsche bereits im Herstellungsprozess berücksichtigt und realisiert werden müssen. Aufgabe der Erfindung ist es, eine verbesserte Scheibeneinheit zur Verfügung zu stellen, welche im Aufbau einfach ist und vorzeitige Beschädigungen am Blendenelement vermindert.

Eine Lösung wird durch die Merkmale des Anspruchs 1 bereitgestellt. Alternative Ausführungsformen sind in den Unteransprüchen beschrieben.

Durch diese Ausgestaltung wird der Führungssteg gemäß der ersten Alternative gleichzeitig mit der Ausbildung des Primärteils zur Ausbildung des Rahmens hergestellt, so dass sowohl der Führungssteg als auch das Primärteil gleichzeitig in einem ersten Schritt bei der Herstellung eines Rahmens als Zwei- oder Mehrkomponenten-Umspritzung hergestellt sind. Die zweite Alternative weist den Vorteil auf, dass durch das Einbringen des Sekundärteils als Weichkomponente in nur einem Umspritzungsvorgang der Führungssteg zur feststehenden Scheibe verbunden werden kann. Gleichzeitig kann bei beiden Alternativen durch die Bildung des Aufnahmebereichs an einer zur Außenseite einer Karosserie weisenden Seite des Führungssteges der Vorteil erzielt werden, dass das Blendenelement erst nach der vollständigen Montage der Scheibeneinheit in der Karosserie der Fahrzeugtür aufsetzbar und befestigbar ist. Somit kann ein Grundmodul einer Scheibeneinheit geschaffen werden, welches nachträglich entsprechend den Designwünschen angepasst wird. Darüber hinaus kann auch ein Beschädigen des Blendenelementes während dem Einbau der Scheibeneinheit verhindert sein.

Eine bevorzugte Ausführungsform ist dadurch vorgesehen, dass der Führungssteg mit wenigstens einem nachträglich montierbaren Blendenelement verbindbar ist. Diese Ausführungsform ermöglicht es, gemäß den jeweiligen Dekorwünschen nach dem Einbau der Scheibe mit Führungssteg ein entsprechendes Blendenelement in Abhängigkeit des Geschmackes des Käufers nachträglich zu montieren.

Die Erfindung sieht vor, dass der als Einlegeteil ausgebildete Führungssteg von dem Sekundärteil zumindest teilweise umspritzt und zur ersten Scheibe befestigt ist. Durch diese Anordnung können in einem separaten Arbeitsgang hergestellte Führungsstege eingesetzt werden, welche über das Sekundärteil, welches als Weichkomponente ausgebildet ist, zur Scheibe positioniert und fixiert gehalten werden.

Eine bevorzugte Ausführungsform des als Einlegeteil ausgebildeten Führungssteges sieht vor, dass dieser Führungssteg einteilig oder auch mehrteilig ausgebildet ist. Insbesondere bei der mehrteiligen Ausführungsform des Führungssteges kann der Führungssteg vor dem Einlegen in ein Spritzgusswerkzeug zusammengesteckt werden, so dass ein einteiliger Führungssteg entsteht, der durch das Sekundärteil zumindest teilweise umspritzt ist. Alternativ kann auch ein Teil des Führungssteges in das Spritzgusswerkzeug eingelegt und mittels Sekundärteil an die erste Scheibe angespritzt sowie vor dem Einbau in die Karosserie ein zweites Führungsteil an das erste Führungsteil gesteckt werden.

Nach einer alternativen Ausführungsform der Scheibeneinheit weist eine Außenseite des Führungssteges zur Bildung des Aufnahmebereiches des Blendenelementes eine sehr dünne mit dem Sekundärteil als Weichkomponente überspritzte Anlagefläche auf. Durch diese alternative Ausführungsform können einzelne Toleranzen besser ausgeglichen werden. Darüber hinaus kann bei einer solchen Ausführungsform eine verbesserte Vibrationsdämpfung ermöglicht sein.

Eine weitere bevorzugte Ausgestaltung der Erfindung sieht vor, dass der Aufnahmebereich für das Blendenelement durch eine Außenseite des Führungssteges und einen daran angrenzenden Abschnitt des Sekundärteils gebildet ist, welches an den Führungssteg beziehungsweise dessen Außenseite angrenzt. Diese Ausgestaltung ermöglicht, dass der Übergangsbereich zwischen dem Sekundärteil und dem Führungssteg, der als Einlegeteil oder als Primärteil ausgebildet ist, durch das Blendenelement überdeckt wird. Zusätzlich kann das Sekundärteil einen Hinterschneidungsbereich aufweisen, an welchem eine Längsseite des Blendenelementes einsetzbar ist, so dass diese Hinterschneidung als zusätzliche Fixierung für eine Längsseite des Blendenelementes wirkt.

Eine weitere bevorzugte Ausgestaltung der Erfindung sieht an dem Führungssteg Halteelemente vor, welche vorzugsweise zur Verklipsung, Verkrallung, Schlüssellochverrastung, Verklemmung mit dem Blendenelement ausgebildet sind. Dadurch kann abhängig von den jeweiligen Einsatzfällen eine entsprechende Befestigungsart ausgewählt werden, die auch in Abhängigkeit der Möglichkeiten für eine nachträgliche Befestigung des Blendenelementes an der bereits montierten Scheibeneinheit steht.

Des Weiteren weist der Führungssteg wenigstens eine umspritzungsfreie Anlagefläche auf. Dabei bleibt insbesondere eine zur Fahrzeugaußenseite weisende Außenseite des Führungssteges frei, so dass auf die nicht umspritzte Außenseite des Führungssteges das Blendenelement aufsetzbar ist und anliegt.

Als vorteilhafte Ausführungsform bildet der Führungssteg wenigstens eine U-förmige Führungsfläche für die Fensterführung der zweiten Scheibe. Hierbei kann die Führungsfläche durch ein U-förmiges Profil in Richtung der Stirnseite der zweiten Scheibe ausgebildet sein.

Die Erfindung wird im Folgenden anhand der Zeichnungen erläutert. Es zeigen:
Figur 1 eine schematische Seitenansicht auf eine Scheibeneinheit auf eine am Fahrzeug außenliegende Seite,
Figur 2 eine schematische Schnittdarstellung eines Führungssteges der Scheibeneinheit entlang der Linie I-I in Figur 1,
Figur 3a eine schematische Schnittdarstellung einer alternativen Ausführungsform zu Figur 2,
Figur 3b eine Draufsicht auf einen Aufnahmebereich des Führungsstegs gemäß Figur 3a,
Figur 4 eine schematische Schnittdarstellung eines alternativen Führungssteges der Scheibeneinheit entlang der Linie I-I in Figur 1,
Figur 5 eine schematische Schnittdarstellung eines alternativen Führungssteges der Scheibeneinheit entlang der Linie I-I in Figur 1 und
Figur 6 eine schematische Schnittdarstellung eines alternativen Führungssteges der Scheibeneinheit entlang der Linie I-I in Figur 1.

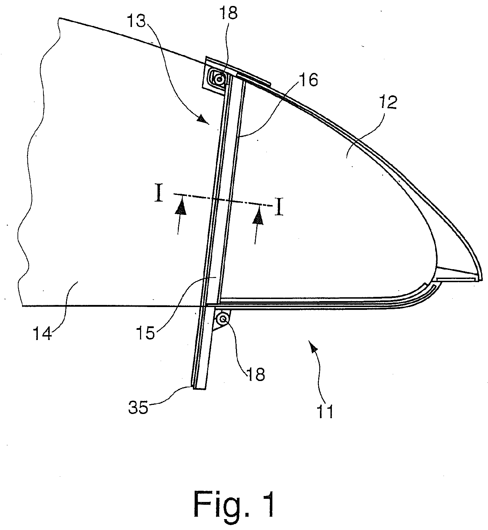

In Figur 1 ist eine Scheibeneinheit 51 mit Rahmen 11 in seitlicher Ansicht auf die am Fahrzeug außen liegende Seite gezeigt. Diese Scheibeneinheit 51 umfasst eine erste Scheibe 12, welche fest in einer Tür eines Kraftfahrzeugs montierbar ist. Dabei ist die erste Scheibe 12 an der vertikalen Stirnseite 13 einer zweiten auf und ab bewegbaren Scheibe 14 zugeordnet. Zwischen der ersten Scheibe 12 und der zweiten Scheibe 14 ist ein Führungssteg 15 angeordnet, welcher sich nach unten in die Tür über die Stirnseite 13 der ersten Scheibe 12 hinaus fortsetzt. Die erste Scheibe 12 umfasst einen Rahmen 11, der bei diesem Ausführungsbeispiel die Scheibe 12 vollständig und geschlossen umgibt. Auf dem Führungssteg 15 ist ein Blendenelement 17 angeordnet, dessen nachträgliche Aufbringung und Befestigung in den nachfolgenden Figuren näher beschrieben wird. An dem Rahmen 11 sind bevorzugt Befestigungselemente 18 angeordnet und unmittelbar angeformt. Diese Befestigungselemente 18 können auch als separate Bauteile ausgebildet und nachträglich nach Herstellung des Rahmens 11 daran angeordnet werden. Über diese Befestigungsmittel 18 oder Befestigungselemente wird die Scheibeneinheit 51 beispielsweise in einer Tür des Kraftfahrzeuges montiert.

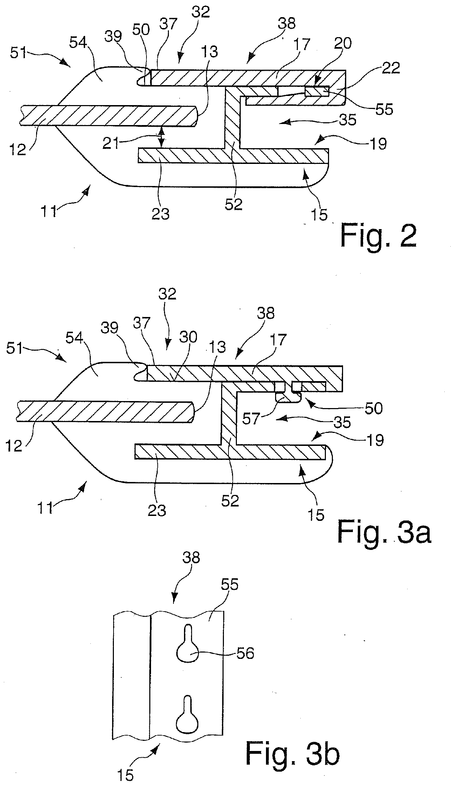

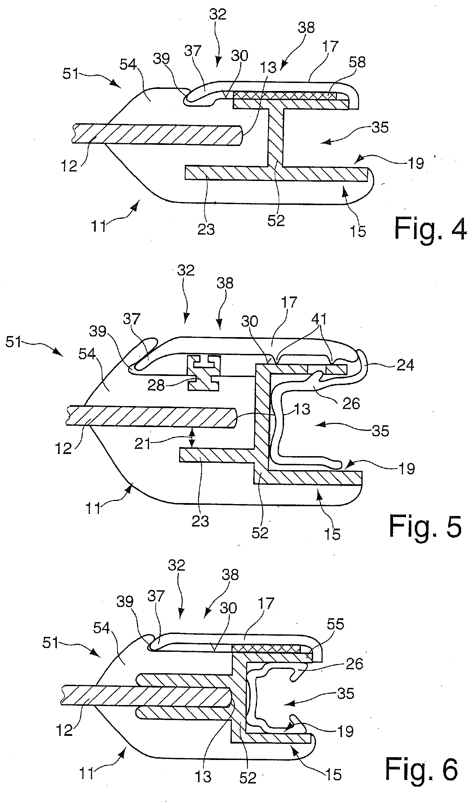

In Figur 2 ist eine Scheibeneinheit 51 im Querschnitt senkrecht zur Längsachse des Führungsstegs 15 gemäß Schnitt I-I in Figur 1 dargestellt. Die Scheibeneinheit 51 weist einen Führungssteg 15 mit einem auf einem U-Profil 19 aufgeschobenen Blendenelement 17 auf. Das Blendenelement 17 ist beispielsweise mittels Verhakungen 20 auf dem Führungssteg 15 arretiert. Diese Verhakungen 20 können mehrfach entlang dem Blendenelement 17 beziehungsweise des Führungssteges 15 vorgesehen sein. Bei dieser Scheibeneinheit 51 ist der Führungssteg 15 als Einlegeteil ausgebildet, der beispielsweise das Profil eines Buchstabens "h" aufweist. Alternativ kann dieses Profil auch dem Buchstaben "H" entsprechen. Bei der dargestellten Ausführungsform ist bevorzugt zwischen der Scheibe 12 und einem Stegabschnitt 23 ein Abstand 21 vorgesehen. Bei dieser Ausführungsform umfasst die Scheibeneinheit 51 einen Rahmen 11, der eine mehrkomponentige, insbesondere Zwei-Komponenten-Umspritzung, umfasst, wobei zumindest im Bereich der Schnittdarstellung ein als Weichkomponente ausgebildeter Sekundärteil 54 vorgesehen ist, durch welchen der Führungssteg 15 zur Stirnseite 13 der Scheibe 12 positioniert und fixiert ist. Zusätzlich greift in den weiteren Bereichen der Scheibe 12 auch ein als Hartkomponente ausgebildetes Primärteil 52 an der Scheibe an, welches von dem Sekundärteil 34 zumindest teilweise umspritzt ist. Bei einer Zwei-Komponenten-Umspritzung besteht der Rahmen 11 aus dem als Hartkomponente ausgebildeten Primärteil 52 und dem als Weichkomponente ausgebildeten Sekundärteil, wobei die Weichkomponente eine geringere Formfestigkeit als die Hartkomponente umfasst. Alternativ kann bei dieser Ausführungsform auch vorgesehen sein, dass der Führungssteg 15 aus der Hartkomponente hergestellt ist und einen Teil des Primärteils 52 bildet, welches unmittelbar an der Scheibe 12 angespritzt wird. Die Anbindung des Führungssteges 15 an die Scheibe 12 ist beispielsweise in Figur 6 dargestellt. Alternativ kann auch vorgesehen sein, dass der Führungssteg 15 bei der unmittelbaren Anspritzung an die Scheibe 12 nur an einer Seitenfläche und/oder der Stirnseite 13 anliegt und angreift.

Zur Außenseite 32 des Rahmens 11 weist der Führungssteg 15 einen Aufnahmebereich 38 für das Blendenelement 17 mit einer Anlagefläche 30 auf. An diese Anlagefläche 30 schließt sich eine weitere Anlagefläche an, welche durch das Sekundärteil gebildet ist. Das Blendenelement 17 liegt mit seiner Innenseite bevorzugt vollflächig an der Anlagefläche 30 an. An einem dem Sekundärteil 54 zugewandten Ende 37 des Blendenelementes 17 umfasst der Aufnahmebereich 38 bevorzugt eine Hinterschneidung 39, in welcher das Ende 37 des Blendenelementes 17 bündig anliegt oder dieses hintergreift. Dadurch kann eine definierte und auch dichte Anordnung beziehungsweise ein Abschluss zwischen dem Sekundärteil 54 und dem Führungssteg 15 erfolgen. Das Blendenelement 17 weist seinerseits einen als U-Profil 22 ausgebildeten Bereich auf, welcher mit den Verhakungen 20 korrespondiert und einen Schenkel 55 des Führungssteges 15 umgibt.

Figur 3a zeigt eine Scheibeneinheit 51 mit dem Rahmen 11 gemäß Figur 2 mit dem Blendenelement 17, welches alternativ mittels Schlüsselloch-Verrasterung 50 am Führungssteg 15 befestigt ist. Der Schenkel 55 kann dabei dergestalt ausgebildet sein, dass ein Nippel 57 oder Pilzkopf derart in eine Schlüssellochöffnung 56 gemäß Figur 3b eingreifen kann, dass dessen Außenseite bündig mit einer zur Fensterführung 35 weisenden Innenseite des Führungssteges 15 ausgebildet ist. Alternativ kann dieser auch geringfügig hervorspringen, wobei dann ein in die Fensterführung 35 einsetzbares Fensterführungselement 26, wie dies beispielhaft in den Figuren 5 und 6 dargestellt ist, daran angepasst ist, um diesen Überstand auszugleichen. Das Blendenelement 17 kann an einer zur zweiten Scheibe 14 weisenden Stirnseite eine Umkantung aufweisen, welche den Schenkel 55 des Führungssteges 15 überdeckt, um einen optisch ansprechenden Abschluss zur zweiten Scheibe 14 zu erzielen.

Die weiteren Ausgestaltungs- und Variationsmöglichkeiten, welche zu Figur 2 beschrieben wurden, gelten auch für diese Ausführungsform.

Figur 3b zeigt eine Draufsicht auf den Aufnahmebereich 38 des Führungssteges mit der Schlüsselloch-Verrasterung 50 gemäß Figur 3a. Dabei sind an dem Aufnahmebereich 38 des Führungsstegs 15 die schlüssellochförmige Öffnungen 56 in Längsrichtung des Führungsstegs 15 der Reihe nach angebracht, in welche die schlüsselförmigen Nippel 57 des Blendenelements 17 gemäß Figur 3a eingreifen und einrasten können.

In Figur 4 ist eine weitere alternative Ausführungsform zu Figur 2 dargestellt. Diese Ausführungsform weicht gegenüber der Figur 2 dahingehend ab, dass der Schenkel 55 des Führungssteges 15 geschlossen ausgebildet ist, so dass eine geschlossene Anlagefläche 30 als Aufnahmebereich vorhanden ist, um beispielsweise ein Klebemittel 58 für eine Verklebung abschnittsweise oder insbesondere vollflächig aufzubringen und das Blendenelement 17 zu fixieren. Diese Verklebung 58 kann auch ein doppelseitiger Klebestreifen sein, der sich über die Breite der Außenseite des Führungssteges 15 erstreckt oder auch einen angrenzenden Bereich einer Anlagefläche des Sekundärteils 54 mit umfasst. Bei der in Figur 4 dargestellten Ausführungsform des Führungssteges 15 ist beispielsweise ein "H"-ähnliches Profil vorgesehen. Dadurch kann die Anlagefläche 30, die aus der Hartkomponente gebildet ist, verbreitert sein.

Darüber hinaus gelten für diese Ausführungsformen auch die in Figur 2 beschriebenen Alternativen.

In Figur 5 ist eine weitere alternative Ausführungsform zu den zuvor dargestellten Ausführungsformen dargestellt. Das Profil des Führungssteges 15 ist abweichend zu dem in Figur 2 ausgebildet. Der Abschnitt 23 ist versetzt zum U-förmigen Profil 19 vorgesehen. Parallel hierzu und mit Abstand 21 kann auch ein weiterer Abschnitt 23 auf der gegenüberliegenden Seite der Scheibe 12 vorgesehen sein.

In dem Führungssteg 15 ist beispielsweise ein Fensterführungselement 26 angeordnet, welches einen Endabschnitt 24 aufweist, welcher zusammen mit dem Hinterschneidungsbereich 39 des Sekundärteils 54 den Aufnahmebereich 38 zur Aufnahme des Blendenelementes 17 begrenzt.

Bei dieser Ausführungsform ist eine weitere alternative Befestigungsmöglichkeit des Blendenelementes 17 dargestellt. Beispielsweise kann in dem Sekundärteil 54 ein zusätzliches Befestigungselement in Form eines Einlegeteils 28 vorgesehen sein, welches das Blendenelement 17 verrastend, verklipsend oder dergleichen fixiert. Dieses Einlegeteil kann wiederum in das Sekundärteil 54 eingesetzt und verrastend oder verklipsend befestigt werden oder als Einlegeteil von dem Sekundärteil 54 teilweise umspritzt oder als Bestandteil des Primärteils 52 als Hartkomponente dargestellt werden.

Das Blendenelement 17 weist bei dieser Ausführungsform Vorsprünge 41 auf, welche einer definierten Anlage des Blendenelementes 17 an einer Außenseite des Führungssteges 15 innerhalb des Aufnahmebereiches 38 dienen.

Auch bei dieser Ausführungsform gelten die zu Figur 2 beschriebenen weiteren Alternativen.

In Figur 6 ist eine weitere alternative Ausführungsform der Scheibeneinheit 51 dargestellt. Diese Ausführungsform weicht dahingehend ab, dass der Führungssteg 15 als Primärteil 52 ausgebildet ist und einen Teil einer Umspritzung 16 der Scheibe 12 bildet. Nach der Herstellung des Fensterführungssteges 15 und des Primärteils 52 wird das Sekundärteil 54 in einem weiteren Verfahrensschritt durch Umspritzen hergestellt. Dabei ist vorgesehen, dass die Auflagefläche 30 des Führungssteges 15 umspritzungsfrei ausgebildet ist. Alternativ kann diese Außenseite des Führungssteges 15 beziehungsweise die Außenseite des Schenkels 55 eine sehr dünne Umspritzungsschicht aufweisen, welche als Weichkomponente ausgebildet ist. Der Führungssteg 15 kann unmittelbar im Randbereich der Scheibe 12 angespritzt werden. Alternativ kann zuvor im Randbereich ein Primer oder ein Klebemittel aufgebracht werden. Alternativ kann der Fensterführungssteg 15 gemäß dem Profil in Figur 6 auch als separates Einlegeteil ausgebildet und auf die Scheibe 12 aufgesteckt werden. Das Sekundärteil fixiert den Führungssteg 15 zur Scheibe 12. Zusätzlich kann zwischen dem Führungssteg 15 und der Scheibe 12 auch ein Klebemittel oder Primer eingesetzt werden.

Alle vorgenannten Alternativen zu den jeweiligen Ausführungsformen gelten auch für dieses Ausführungsbeispiel und umgekehrt. Das Blendenelement 17 ist bei diesem Ausführungsbeispiel durch die Verklebung 58 befestigt. Die vorbeschriebenen Befestigungsmöglichkeiten zur Positionierung und Fixierung des Blendenelementes 17 im Aufnahmebereich 38 sind ebenso möglich.

Bei dieser Ausführungsform ist vorgesehen, dass ein Endabschnitt des Blendenelements den Schenkel 55 zumindest teilweise umgreift, so dass dieser von außen nicht sichtbar ist. Die Anlagefläche 30 im Aufnahmeraum 38 kann, wie in Figur 6 dargestellt ist, durch das Sekundärteil 54 und der Außenseite des Schenkels 55 des Führungssteges 15 gebildet werden, wobei diese eine gemeinsame Ebene bilden. Alternativ kann auch ein Abschnitt der Auflagefläche 30 am Führungssteg versetzt zu einem Abschnitt am Sekundärteil ausgebildet sein, wie dies beispielsweise in Figur 5 dargestellt ist. Diese Anlagefläche 30 und deren Erstreckung und/oder Konturierung stehen in Abhängigkeit der verwendeten Befestigungselemente oder Befestigungstechnik für das Blendenelement 17 im Aufnahmebereich 38.

Der Vorteil der Erfindung ist die einfache Montage der Scheibeneinheit 51 im entsprechenden Karosserieteil des Kraftfahrzeugs wie beispielsweise einer hinteren Tür. Das Blendenelement 17 kann nachträglich ausgetauscht beziehungsweise montiert werden. Somit können individuelle Designwünsche im Anschluss an den eigentlichen Herstellungsprozess der Scheibeneinheit realisiert werden, wodurch die Gefahr von Beschädigungen reduziert wird und auf kostenaufwändige Schutzmaßnahmen des Blendenelements 17 verzichtet werden kann.

## Patentansprüche

1. Scheibeneinheit für Fenster an Kraftfahrzeugen und dergleichen,
- mit einer ersten Scheibe (12),
- mit einem Rahmen (11), der ein mehrteiliges Rahmenprofil mit zumindest einem Sekundärteil (54) als Weichkomponente aufweist und an einem Rand der Scheibe (12) an wenigstens zwei Seiten der Scheibe (12) angreift, wobei der Rahmen (11) wenigstens zwei Stirnseiten (13) der Scheibe (12) umfasst oder die Scheibe (12) ringförmig in sich geschlossen umgibt und mit einem Führungssteg (15) zur Führung einer zweiten auf und ab bewegbaren Scheibe (14), welche zur ersten Scheibe (12) angeordnet ist,
- wobei der Führungssteg (15) eine U-förmige Fensterführung für die zweite Scheibe (14) bildet,
- mit einem an dem Rahmen (11) zur Außenseite (32) einer Karosserie weisenden Aufnahmebereich (38) für ein Blendenelement (17),
- an welchem wenigstens ein Blendenelement (17) nachträglich montierbar ist,
- wobei der Aufnahmebereich (38) für das Blendenelement (17) durch eine Außenseite eines Schenkels (55) des U-förmigen Führungssteges (15) und einem daran angrenzenden Abschnitt des Sekundärteils (54) an dem Führungssteg (15) gebildet ist,
**dadurch gekennzeichnet,**
- **dass** der Führungssteg (15) ein als Hartkomponente ausgebildetes Primärteil (52) ist,
- **dass** der aus Primärteil (52) und Sekundärteil (54) bestehende Rahmen (11) aus einer Zwei-Komponenten Umspritzung besteht,
- **dass** der Führungssteg (15) als Einlegeteil ausgebildet ist, welches von dem Sekundärteil (54) zumindest teilweise umspritzt und zur ersten Scheibe (12) fixiert ist, und das Sekundärteil (54) eine geringere Formsteifigkeit als das Primärteil (52) aufweist,
- **dass** an einem Schenkel (55) des U-förmigen Fensterführungssteges (15) die Halteelemente (25) für das Blendenelement (17) vorgesehen sind oder dass in dem Sekundärteil (54) ein Einlegeteil (28) zur Fixierung des Blendenelementes (17) vorgesehen ist.

2. Scheibeneinheit nach Anspruch 1, **dadurch gekennzeichnet, dass** der Führungssteg (15) in einem Abstand (21) zur ersten Scheibe (12) angeordnet ist.

3. Scheibeneinheit nach Anspruch 2, **dadurch gekennzeichnet, dass** der Führungssteg (15) einstückig oder mehrteilig ausgebildet ist.

4. Scheibeneinheit nach einem der vorhergehenden Ansprüche, **dadurch gekennzeichnet, dass** der Führungssteg (15) wenigstens eine umspritzungsfreie Anlagefläche (30) im Aufnahmebereich (38) aufweist, an welcher das Blendenelement (17) anliegt.

5. Scheibeneinheit nach einem der vorhergehenden Ansprüche, **dadurch gekennzeichnet, dass** Halteelemente (25) zur Verklipsung, Verkrallung, Schlüssellochverrasterung, Verklemmung oder Verklebung des Blendenelementes (17) am Führungssteg (15) ausgebildet sind.

6. Scheibeneinheit nach einem der vorhergehenden Ansprüche, **dadurch gekennzeichnet, dass** das Blendenelement (17) als Einlegeteil ausgebildet und von dem Sekundärteil (54) zumindest teilweise umspritzt sowie zum Führungssteg (15) fixiert ist.

7. Scheibeneinheit nach einem der vorhergehenden Ansprüche, **dadurch gekennzeichnet, dass** der den Aufnahmebereich (38) begrenzenden Randabschnitt des Sekundärteils (54) eine Hinterschneidung (49) oder einen einfassenden Rand aufweist.

8. Scheibeneinheit nach einem der vorhergehenden Ansprüche, **dadurch gekennzeichnet, dass** der Fensterführungssteg (15) das Profil eines Buchstabens h oder H aufweist.

## Claims

1. Pane unit for windows on motor vehicles and the like,
- with a first pane (12),
- with a frame (11) which has a multi-part frame profile with at least one secondary part (54) as a soft component and engages on a margin of the pane (12) on at least two sides of the pane (12), the frame (11) surrounding at least two end faces (13) of the pane (12) or annularly surrounding the pane (12) so as to be closed on itself, and
- with a guide web (15) for guiding a second pane (14) which is movable up and down and is arranged towards the first pane (12), wherein the guide web (15) forms a U-shaped window guide (35) for the second pane (14) with a reception region (38) for a panel element (17) which is provided on the frame (11) so as to point towards the outside (32) of a body, to which at least one panel element (17) is mountable subsequently,
- wherein the reception region (38) for the panel element (17) is formed by an outside of a branch (55) of the U-shaped guide web (15) and a portion, adjacent thereto, of the secondary part (54) on the guide web (15), **characterized in,**
- **that** the guide web (15) is formed by a hard component as part of a primary part (52),
- **that** the frame (11) consisting of the primary part (52) and the secondary part (54) is formed by a two-component injection moulding,
- **that** the guide web (15) is designed as an introduction part which is at least partially injection-moulded around by the secondary part (54) and which is fixed with respect to the first pane (12), and the secondary part (54)
- has a lower form stability than the primary part (52),
- **that** holding elements (25) for the panel element (17) are provided of one branch (55) of the U-shaped guide web (15) or that an introduction part (28) is provided in the secondary part (54) for fixing the panel element (17).

2. Pane unit according to claim 1, **characterized in that** the guide web (15) is arranged in a clearance (21) with respect to the first pane (12).

3. Pane unit according to Claim 2, **characterized in that** the guide web (15) is formed in one piece or is multi-part.

4. Pane unit according to one of the preceding claims, **characterized in that** the guide web (15) has at least one bearing face (30), free of an injection-moulded surround, in the reception region (38), against which bearing face the panel element (17) bears.

5. Pane unit according to one of the preceding claims, **characterized in that** the guide web (15) has holding elements (25) are formed for the snapping, claw fastening, keyhole locking, clamping or adhesive, bonding of the panel element (17) on the guide web (15).

6. Pane unit according to one of the preceding claims, **characterized in that** the panel element (17) is designed as an introduction part and is at least partially injection-moulded around by the secondary part (54) and is also fixed with respect to the guide web (15).

7. Pane unit according to one of the preceding claims, **characterized in that** the marginal portion, delimiting the reception region (38), of the secondary part (54) has an undercut (49) or a bordering margin.

8. Pane unit according to one of the preceding claims, **characterized in that** the guide web (15) is designed as a profil of the character h or H.

## Revendications

1. Module de vitrage pour fenêtre de voitures automobiles et véhicules similaires,
- avec une première vitre (12),
- avec un cadre (11) qui présente un profilé de cadre en plusieurs parties pourvu d'au moins une partie secondaire (54) réalisée en tant que composant souple et qui appuie contre au moins deux côtés de la vitre (12), le cadre (11) comprenant au moins deux faces frontales (13) de la vitre (12) ou entourant la vitre (12) tel un anneau, de manière fermée en soi, et étant pourvu d'une partie de guidage (15) destinée à guider une deuxième vitre (14) qui peut monter et descendre et qui est disposée par rapport à la première vitre (12),
- la partie de guidage (15) formant un guide de fenêtre en forme de U pour la deuxième vitre (14),
- avec une zone de réception (38) pour un élément écran (17) laquelle est située sur le cadre (11) et est tournée vers la face extérieure (32) d'une carrosserie,
- sur laquelle au moins un élément écran (17) peut être monté ultérieurement,
- la zone de réception (38) pour l'élément écran (17) étant formée sur la partie de guidage (15) par une face extérieure d'une branche (55) de ladite partie de guidage (15) en forme de U et par un segment de la partie secondaire (54) qui lui est contigu,
**caractérisé en ce que**
- la partie de guidage (15) est une partie primaire (52) réalisée en tant que composant dur
- le cadre (11) constitué par la partie primaire (52) et la partie secondaire (54) est constitué par un surmoulage à deux composants,
- la partie de guidage (15) est formée en tant qu'insert qui est surmoulé au moins partiellement et fixé par rapport à la première vitre (12) par la partie secondaire (54), et **en ce que** la partie secondaire (54) présente une rigidité de forme moindre que la partie primaire (52),
- les éléments de retenue (25) pour l'élément écran (17) sont prévus sur une branche (55) de la partie de guidage de fenêtre (15) en forme de U ou **en ce qu'**un insert (28) permettant de fixer l'élément écran (17) est prévu dans la partie secondaire (54).

2. Module de vitrage selon la revendication 1, **caractérisé en ce que** la partie de guidage (15) est disposée à une distance donnée (21) par rapport à la première vitre (12).

3. Module de vitrage selon la revendication 2, **caractérisé en ce que** la partie de guidage (15) est réalisée en une seule pièce ou en plusieurs pièces.

4. Module de vitrage selon l'une quelconque des revendications précédentes, **caractérisé en ce que** la partie de guidage (15) présente au moins une surface de contact (30) exempte de surmoulage située dans la zone de réception (38) et contre laquelle repose l'élément écran (17).

5. Module de vitrage selon l'une quelconque des revendications précédentes, **caractérisé en ce que** des éléments de retenue (25) destinés à fixer l'élément écran (17) par clips, par griffes, par encliquetage avec éléments en forme de trou à serrure, par coinçage ou par collage sont formés sur la partie de guidage (15).

6. Module de vitrage selon l'une quelconque des revendications précédentes, **caractérisé en ce que** l'élément écran (17) est réalisé sous forme d'insert et surmoulé au moins partiellement par la partie secondaire (54) ainsi que fixé par celle-ci par rapport à la partie de guidage (15).

7. Module de vitrage selon l'une quelconque des revendications précédentes, **caractérisé en ce que** la section périphérique de la partie secondaire (54) qui délimite la zone de réception (38) présente une contre-dépouille (49) ou un bord qui l'entoure.

8. Module de vitrage selon l'une quelconque des revendications précédentes, **caractérisé en ce que** la partie de guidage de fenêtre (15) présente le profil de la lettre h ou H.
